# EUROPÄISCHE PATENTSCHRIFT

(11) **EP 0 646 072 B1**
(45) Veröffentlichungstag und Bekanntmachung des Hinweises auf die Patenterteilung: **08.10.1997**
(21) Anmeldenummer: 93912941.7
(22) Anmeldetag: 09.06.1993
(51) Int. Cl.: B60Q 1/14

(54) **VERSCHLEISSFESTER LENKSTOCKSCHALTER MIT UM ZWEI ZUEINANDER PARALLELE ACHSEN VERSCHWENKBAREM SCHALTHEBEL**
WEAR-RESISTANT STEERING COLUMN SWITCH WITH LEVER PIVOTABLE ABOUT TWO MUTUALLY PARALLEL AXES
COMMUTATEUR DE COLONNE DE DIRECTION RESISTANT A L'USURE AVEC LEVIER DE COMMANDE PIVOTANT AUTOUR DE DEUX AXES PARALLELES

(30) Priorität: 11.06.1992 DE 4219056; 09.06.1993 DE 4319065
(43) Veröffentlichungstag der Anmeldung: 05.04.1995
(73) Patentinhaber: SWF Auto-Electric GmbH, D-74321 Bietigheim-Bissingen (DE)
(72) Erfinder: NEUBAUER, Walter, D-74348 Lauffen (DE)
(74) Vertreter: Portwich, Peter
(86) Internationale Anmeldenummer: EP9301470
(87) Internationale Veröffentlichungsnummer: WO9325407

(56) Entgegenhaltungen:
- DE-A- 3 940 284

## Beschreibung

Die Erfindung betrifft einen Lenkstockschalter für Kraftfahrzeuge, bei dem ein um zwei versetzte Achsen schwenkbarer Schalthebel in einem zu diesen Achsen senkrecht drehbaren Mitnehmer gelagert ist. Ein derartiger Lenkstockschalter ist aus der gattungsgemäßen DE-A-39 40 284 bekannt. Bei diesem Lenkstockschalter ist u.a. eine Langlochführung für den Schalthebel innerhalb des Mitnehmers vorgesehen, so daß der Schalthebel einerseits längs des Langloches um eine zweite Achse schwenkbar ist und dabei einen zweiten Schalter betätigt und weiterhin über einen durch den Rand des Langloches gebildeten Anschlags um eine erste Achse schwenkkbar ist und damit einen ersten Schalter betätigt.

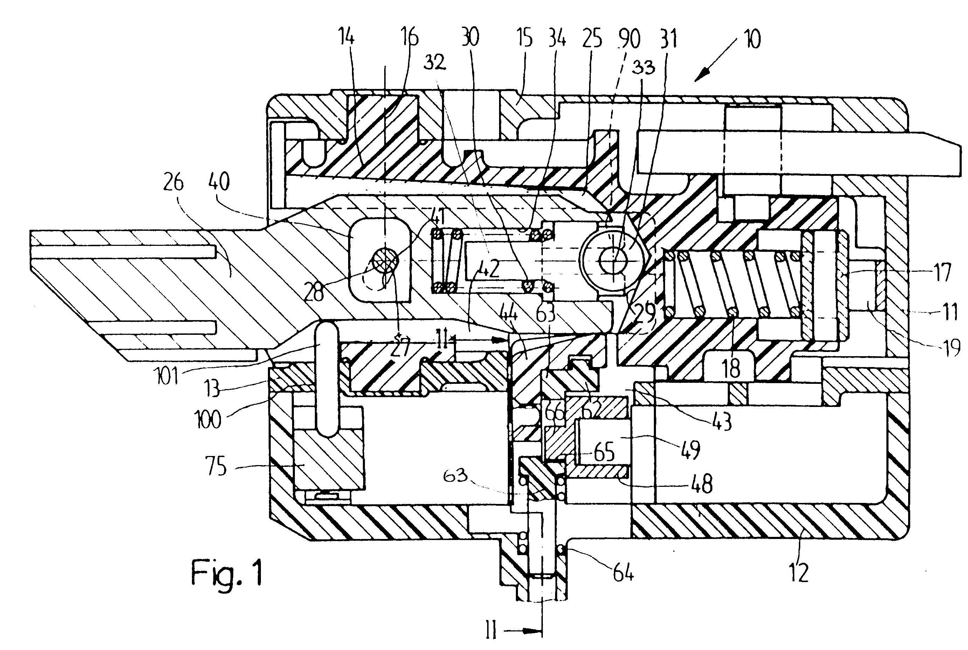

Die Erfindung geht daher aus von einem Lenkstockschalter der sich aus dem Oberbegriff des Anspruchs 1 ergebenden Gattung, die in Figur 1 dargestellt ist. Aufgabe der Erfindung ist es, das Schaltverhalten eines derartigen Lenkstockschalters zu verbessern und bei diesem insbesondere die Anzahl der möglichen Schaltbetätigungen heraufzusetzen.

Die Aufgabe wird durch die sich aus dem kennzeichnenden Teil des Anspruchs 1 ergebende Merkmalskombination gelöst. Die Erfindung besteht im Prinzip also darin, die Führungskanten des Langlochs, insbesondere im Führungsbereich, in einfacher Weise zu verstärken. Dabei ist das Langloch vorzugsweise direkt in das Material des Schalthebels eingearbeitet, was auch für die Befestigung des Begrenzungselementes gilt. Die Erfindung ist aber auch anwendbar für in den Schalthebel einfügbare Schaltkulissen, wie sie beispielsweise in der DE-OS 39 40 284 gezeigt sind. Derartige auswechselbare Kulissen können beispielsweise aus Kunststoff sein, die dann gemäß der vorliegenden Erfindung durch eingefügte Begrenzungselemente in geeigneter Weise verstärkt werden.

Eine Verbesserung der Arbeitsweise des Lenkstockschalters läßt sich durch die Maßnahmen nach Anspruch 2 erreichen, wobei sich durch die erhöhte Festigkeit, insbesondere Härte, und die bearbeitete Oberfläche der Verschleiß bei der Schalterbetätigung herabsetzen läßt.

Eine besonders einfache Ausgestaltung des Begrenzungselementes läßt sich durch die Merkmalskombination nach Anspruch 3 erreichen. Dabei wird das Begrenzungsblech derart an den Rand des Langlochs eingesetzt, daß es selbst über den überwiegenden Teil seiner Umfangsfläche durch das Maparial des Schalthebels umfaßt und gehalten wird, andererseits aber mit einem Teil seiner Oberfläche die Führungsbahn im Langloch an der Stelle bildet, wo ein besonders großer Abrieb zu befürchten ist.

Dabei sollte das Blech derart ausgestaltet sin, daß der im Mitnehmer verankerte Zylinderstift (nachfolgend vielfach Bolzen genannt) sich vorzugsweise ständig über seine gesamte Bewegungsbahn an dem Blech abstützt.

Die genannte Konstruktion ist insbesondere dann geeignet, wenn in dem Langloch nur eine einzige Ruhestellung vorgesehen ist, in die sich der Schalthebel aufgrund einer auf ihn einwirkenden Federspannung selbsttätig zurückstellt.

Will man die Erfindung für einen Lenkstockschalter mit zwei stabilen Endstellungen ersetzen, in die dieser umschaltbar ist, so empfiehlt sich in vorteilhafter Weiterbildung die Merkmalskombination nach Anspruch 4. Die Anwendung dieser Merkmale empfiehlt sich insbesondere dann, wenn das Langloch kreisförmig gekrümmt ist, so daß von der Mantelfläche des zweiten Zylinderstifts ein Teil der gekrümmten Kurvenbahn des Langlochs gebildet wird.

Die Rückstell- bzw. Umschaltwirkung des Schalthebels läßt sich noch durch die Maßnahmen nach Anspruch 5 verbessern. Selbstverständlich kann man durch eine derartige Federwirkung auch das Rückstellverhalten bei einem geraden Langloch gemäß den Ansprüchen 2 und 3 verbessern.

Ein besonders wirkungsvoller Aufbau eines umschaltenden Schalthebels ergibt sich durch die Merkmale nach Anspruch 6. Dabei erhält man für die Kurvenbahn eine vergleichsweise starke Krümmung, welche die Umschaltwirkung des Schalthebels im Sinne eines Rasteffektes verstärkt.

Eine weitere Erhöhung des Rasteffektes läßt sich durch die Merkmalskombination nach Anspruch 7 erreichen.

Für eine vereinfachte Herstellung des Schalters wird man bevorzugt eine Merkmalskombination nach Anspruch 8 einsetzen.

Für ein Rückstellverhalten in eine einzige Endstellung bei einem geraden Langloch empfiehlt sich die Merkmalskombination nach Anspruch 9. Da so das Langloch mit seinem dem ersten Schaltkontakt abgewandten Ende einem in dem Schalthebel eingesetzten federnden Element weiter entfernt ist ist als dem schalterseitigen Ende, ergibt sich hier eine festgelegte Ruhestellung, aus der der Schaltkontakt immer unmittelbar betätigt werden kann. Dies kann insbesondere dann für Schalter wichtig sein, die häufig betätigt werden, beispielsweise zur akustischen oder optischen Signalgebung in Fahrzeugen. Hierdurch werden Schaltwege gespart.

Einen besonders einfachen Aufbau für ein gekrümmtes Langloch, wie es beispielsweise im Zusammenhang mit den Ansprüchen 7 und 8 genannt ist, ergibt sich durch die Merkmalskombination nach Anspruch 9, da hierdurch das Langloch sich relativ einfach bearbeiten läßt.

Verwendet man einen Lenkstockschalter mit einem zwei stabile Endstellungen aufweisenden Schalthebel, so empfiehlt sich in Weiterbildung der Erfindung die Merkaalskombination nach Anspruch 10. Dabei wird den beiden durch das Langloch definierten Endstellungen jeweils die Betätigung des Abblendlichtes bzw. des Fernlichtes zugeordnet. In Weiterbildung hierzu empfiehlt es sich gemäß Anspruch 12, den dem Abblendlicht zugeordneten Anschlag als Drehpunkt des Schalthebels zur Betätigung der Lichthupe zu verwenden. Auch kann der dem Fernlicht zugeordnete Anschlag als Drehpunkt für eine weitere Schalterbestätigung dienen, beispielsweise als zusätzliches Hupsignal oder andere geeignete Einrichtungen.

Eine andere Möglichkeit zur Lösung der oben angegebenen Aufgabe bei einem gattungsgemäßen Lenkstockschalter kann darin bestehen, die einzelnen zu betätigenden Schalter den Schwenkbewegungen derart sinnvoll zuzuordnen, daß sich im Rahmen der praktischen Anwendungen immer nur relativ geringfügige Schaltbewegungen ergeben. So ist es insbesondere zweckmäßig, den in einem Langloch geführten Steuerhebel eine Ruhestellung zuzuordnen, von der aus ohne größeren Schaltweg immer der Schalter bestätigt werden kann, der am häufigsten betätigt wird. Dabei geht man zweckmäßigerweise davon aus, daß Abblendlicht und Fernlicht durch einen Umschalter bestätigt werden, da nur eine der beiden Lichtarten gleichzeitig benötigt werden und nur dann der Schalter betätigt werden soll, wenn es zu einem Wechsel der Lichtart kommt. Andererseits wird angestrebt, daß der Schalthebel nur eine einzige stabile Ruhestellung hat, aus der sich unmittelbar der Schalter betätigen läßt, der am häufigsten benötigt wird. Nach Anspruch 13 ist das Langloch derart auszugestalten, daß der Steuerhebel stets in eine Ruhelage gelangt, von der aus jederzeit das zweite Schaltstück betätigbar ist. Dem zweiten Schaltstück läßt sich beispielsweise die Lichthupe oder eine andere Einrichtung zuordnen, die jederzeit betätigbar sein soll, wie akustische Hupe, Scheibenwischer o.ä..

Vorteilhaft liegt der Angriffspunkt des zweiten Schaltstücks am Schalthebel im Bereich der Schwenklagerung des Schalthebels, wobei der Angriffspunkt des ersten Schaltstücks im Bereich des im Mitnehmer sich befindlichen Ende des Schalthebels liegt. Durch die erfindungsgemäße Anordnung des Langlochs wird der Vorteil erzielt, daß der Schalthebel verschwenkt werden kann, ohne daß das erste Schaltstück bewegt wird. Dabei bewegt sich die Achse, um die der Schalthebel verschwenkt wird, innerhalb des Langlochs, wohingegen das im Mitnehmer sich befindende Ende des Schalthebels nahezu in Ruhe bleibt. Da das Langloch sich im wesentlichen in Richtung auf das zweite Schaltstück erstreckt, wird die Schwenkbewegung des Schalthebels vollständig auf das zweite Schaltstück übertragen. Diese Schwenkbewegung kann solange durchgeführt werden, bis die Achse am einen Ende des Langlochs anliegt, wobei in dieser Position das zweite Schaltstück seine Schaltposition einnimmt. Wird nun der Schalthebel, insbesondere über einen spürbaren Druckpunkt hinaus, weiterverschwenkt, so schwenkt der Hebel nicht mehr um das im Mitnehmer sich befindende Ende, sondern um die im Langloch sich befindende Achse, die am einen Ende des Langlochs anliegt. Bei dieser weiteren Schwenkbewegung wird nun das im Mitnehmer sich befindende Ende verschwenkt, wodurch das erste Schaltstück aktiviert wird. Wird über dieses erste Schaltstück die Lichtumschaltfunktion und über das zweite Schaltstück die Lichthupenfunktion gesteuert, dann kann über die erste Betätigung des Schalthebels die Lichthupe angesteuert werden und über die weitere Betätigung des Schalthebels die Fahrlichtumschaltung. Der Schalthebel muß bei der erfindungsgemäßen Ausgestaltung nur noch in einer Richtung bewegt werden, wobei er zuerst die Lichthupe und dann die Fahrlichtumschaltung betätigt.

Bei einer Weiterbildung ist vorgesehen, daß die Schwenkachse von einem Bolzen gebildet wird, der sich in der Ruhelage des Schalthebels an dem vom zweiten Schaltstück entfernt liegenden Ende des Langlochs befindet. Hierdurch wird der maximale Weg des Bolzens im Langloch für die Betätigung des zweiten Schaltstücks zur Verfügung gestellt. Die Ruhelage des zweiten Schaltstücks wird durch die Anlage des Bolzens an dem vom zweiten Schaltstück entfernt liegenden Ende des Langlochs definiert, wohingegen die Arbeitslage des zweiten Schaltstücks durch die Anlage des Bolzens an dem zweiten Schaltstück zugewandten Ende des Langlochs definiert wird.

Bevorzugt weist der Schalthebel wenigstens zwei Schaltstufen auf, wobei in der ersten Schaltstufe das zweite Schaltstück und in der zweiten Schaltstufe das erste Schaltstück betätigt werden.

Gemäß einer Weiterbildung ist vorgesehen, daß der Schalthebel durch eine Wand des Schaltergehäuses in dieses hineinragt, daß das erste Schaltstück und das zweite Schaltstück und/oder der zweite bewegliche Kontakt im wesentlichen quer zum Schalthebel ausgerichtet sind und daß sich das zweite Schaltstück und/oder der zweite bewegliche Kontakt nahe an der Wand des Schaltergehäuses befinden durch die der Schalthebel hindurchtritt und daß das erste Schaltstück und das Umschaltwerk im Abstand davon angeordnet sind. Dieser Aufbau weist den Vorteil auf, daß er besonders platzsparend ist und daß durch den großen Abstand der beiden Schaltstücke geringe Schaltwege am Schalthebel erzielbar sind.

Bei einer Ausführungsform ist vorgesehen, daß der Schalthebel in einem verschwenkabren Mitnehmer verschwenkbar gelagert ist, daß der Schieber des Umschaltwerks durch einen Durchbruch im Mitnehmer hindurch mit dem Schalthebel gekoppelt ist und daß sich der zweite bewegliche Kontakt und/oder das zweite Schaltstück zwischen einer Lagerbrücke für den Mitnehmer und eine feste elektrische Kontakte tragenden Grundplatte befindet. Dieser Aufbau hat bei der erfindungsgemäßen Ausgestaltung des Lenkstockschalters den Vorteil, daß eine geringe Anzahl an Bauteilen erforderlich ist.

Weitere Merkmale, Vorteile und Einzelheiten der Erfindung ergeben sich aus den Unteransprüchen und der nachfolgenden Beschreibung, in der unter Bezugnahme auf die Zeichnung ein besonders bevorzugtes Ausführungsbeispiel dargestellt ist. Dabei zeigen
- Fig. 1: einen Längsschnitt durch das erste Ausführungsbeispiel, welches als Stand der Technik die Arbeitsweise eines gattungsgemäßen Schalters zeigt.
- Fig. 2: einen Schnitt entlang der Linie II-II aus Fig. 1,
- Fig. 3: eine Draufsicht auf die bestückte Bodenplatte der Ausführung nach Fig. 1,
- Fig. 4: einen Schnitt entlang der Linie IV-IV aus Fig. 3, und
- Fig. 5: einen Ausschnitt aus Fig. 1 mit einem ein erfindungsgemäßes Begrenzungselement aufweisenden Langloch,
- Fig. 6: einen Ausschnitt aus Fig. 1 mit einem ein anderes erfindungsgemäßes Begrenzungselement aufweisenden Langloch und
- Fig. 7: Eine Ausführungsform nach Fig. 6 in einer abgewandelten Schaltstellung.

Bei dem in Fig. 1 gezeigten Lenkstockschalter ist in einem Gehäuse 10, zu dem ein kastenförmiges Oberteill 11 aus Zinkdruckguß und eine Bodenschale 12 aus Kunststoff sowie ein Zwischenboden 13 gehören, der sich im wesentlichen auf Höhe der Fuge zwischen dem oberen Teil und der Bodenschale 12 befindet, ein Mitnehmer 14 so in einer Decke 15 des Oberteils 11 und im Zwischenboden 13 gelagert, daß er um die Achse 16 in einer allgemein als horizontal bezeichneten Ebene verschwenkt werden kann. Die Schaltkurve des Mitnehmers 14 wird dabei durch eine Rastrolle 17, die am Mitnehmer 14 geführt und über eine Feder 18 abgestützt ist und zwei Rasthebeln 19 bestimmt, die am Gehäuse 10 schwenkbar gelagert sind und gegen die die Rastrolle 17 von der Feder 18 gedrückt wird.

In einen Hohlraum 25 des Mitnehmers 14 ragt ein Schalthebel 26 hinein, der über einen Bolzen 27, dessen Achse 28 senkrecht durch die Achse 16 geht, in einer allgemein als vertikal bezeichneten Ebene schwenkbar am Mitnehmer 14 gelagert ist. Eine dem Hohlraum 25 zugekehrte Wand des Mitnehmers 14 ist als Schaltkurve 29 ausgebildet, gegen die von einer Schraubenfeder 30 eine Rastrolle 31 gedrückt wird. Die Schraubenfeder 30 ist in einer Sackbohrung 34 des Schalthebels 26 aufgenommen.

In den Schalthebel 26 ist eine separate Bolzenfühung 40 eingesetzt, die mit einem Langloch 41 für den Bolzen 27 versehen ist. Zu beiden Seiten des Schalthebels 26 ragt der Bolzen 27 in passende Bohrungen des Mitnehmers 14 hinein, die nicht näher dargestellt sind. An drei parallel zum Langloch 41 verlaufenden Außenkanten ist die Bolzenführung 40 abgerundet, während sie an einer Kante eckig ist. Dadurch ist jeweils eine richtige Montage der Bolzenführung am Schalthebel 26 gewährleistet. Das Langloch 41 kann auch direkt im Schalthebel 26 vorgesehen sein.

In Richtung der Achse 28 des Bolzens 27 sind die Abmessungen des Hohlraums 25 im Mitnehmer 14 und des Schalthebels 26 so aufeinander abgestimmt, daß der Schalthebel 26 den Mitnehmer 14 mitdreht, wenn er um die Achse 16 verschwenkt wird.

Der Hohlraum 25 ist so ausgebildet, daß er sich nach außen hin konisch aufweitet. Dies hat den Vorteil, daß der Schalthebel 26 bei geringen Schwenkbewegungen innerhalb dieses Hohlraums 25 um die Rastrolle 31 bzw. um eine am Ende des Schalthebels 26 vorgesehene Führung 90 verschwenken kann, ohne daß er an der Wandung des Hohlraums 26 anstößt. Bei dieser Verschwenkbewegung bewegt sich der Bolzen 27 im Langloch 41.

Wird der Schalthebel 26 weiterverschwenkt, was ebenfalls im Uhrzeigersinn erfolgt, so erfolgt dies um die Achse 28, da der Bolzen 27 am unteren Ende des Langlochs 41 anliegt. Dabei betätigt er einen durch einen Durchbruch 42 im Mitnehmer 14 und einen Durchbruch 43 im Zwischenboden 13 sich erstreckenden und an ihm anliegenden Schieber 44 eines ersten Umschaltwerks, das in der Bodenschale 12 und im Zwischenboden 13 des Gehäuses 10 gelagert ist.

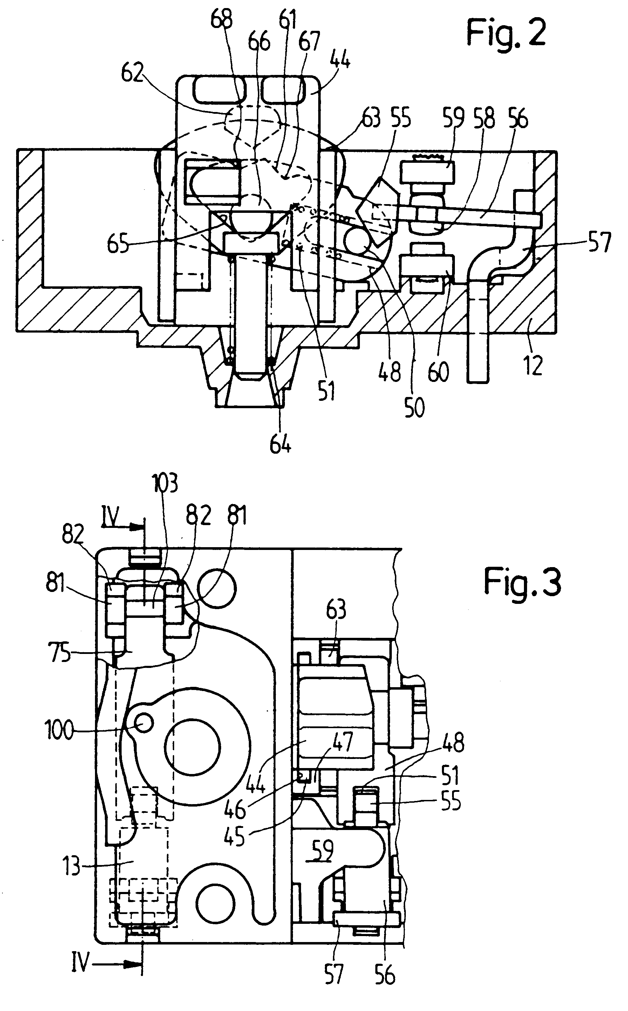

Der Schieber 41 hat im wesentlichen die Form eines Winkels, der mit seinem einen Schenkel am Schalthebel 26 anliegt und mit zwei Federn 45 (Fig. 3) an seinem anderen Schenkel, der parallel zur Schwenkachse 16 des Mitnehmers 14 gerichtet ist, in zwei Nuten 46 geführt ist, die sich in zwei vom Zwischenboden 13 in die Bodenschale 12 hinein abstehenden Leisten 47 befinden. Zu dem Umschaltwerk gehört außerdem ein Schaltstück 48 (Fig. 2), das auf einem Lagerzapfen 49 der Bodenschale 12 schwenkbar gelagert ist und in dem in bekannter Weise eine Schaltwalze 50 radial verschiebbar geführt wird und über eine Druckfeder 51 abgestützt ist. Die Schaltwalze 50 wirkt wechselweise mit den beiden Flanken eines dachförmigen Rastkörpers 55 aus Kunststoff zusammen, der an das freie Ende eines Kontaktbalkens 56 angespritzt ist, der mit seinem anderen Ende an einem in der Bodenschale fixierten Festkontakt 57 schneidenartig gelagert ist. Zwischen dem Festkontakt 57 und dem Rastkörper 55 trägt der Kontaktbalken 56 einen Doppelkontaktniet 58, der in den beiden möglichen Schalterstellungen des Kontaktbalkens 56 entweder an einem oberhalb oder an einem unterhalb des Kontaktbalkens in der Bodenschale 12 fixierten Festkontakts 59 bzw. 60 anliegt.

In der in Fig. 2 deutlich gezeigten Schalterstellung wird der Doppelkontaktniet 58 aufgrund der Kraft der die Schaltwalze 50 beaufschlagenden Druckfeder 51 gegen den Festkontakt 59 gedrückt. Wenn nun das Schaltstück 48, nach Fig. 2 betrachtet, entgegen dem Uhrzeigersinn verschwenkt wird, gleitet die Schaltwalze 50 an der Flanke des Rastkörpers 55, an der sie anliegt, in Richtung auf die Dachspitze hin entlang, wobei die Druckfeder 51 zunehmend gespannt wird. Nach Überschreiten der Dachspitze gleitet die Schaltwalze 50 auf der anderen Flanke von der Dachspitze weg, wobei sich die Druckfeder 51 entspannt und den Kontaktbalken 56 schlagartig in die andere Schaltstellung bringt, in der der Doppelkontaktniet 58 am Festkontakt 60 anliegt.

Zum Verschwenken besitzt das Schaltstück 48 eine Steuerkurve 61 mit zwei V-förmigen Mulden 67 und 68, die mit einem Umschaltnocken 62 zusammenwirken. Dieser Umschaltnocken 62 liegt in der Ruhestellung zentral über der Steuerkurve 61 und ist an ein Schwenkschiebestück 63 angeformt, das sich im wesentlichen zwischen dem Schieber 44 und dem Schaltstück 48 bfindet und in dieselbe Richtung wie der Schieber 44 verschiebbar, zusätzlich jedoch auch verschwenkbar im Gehäuse geführt ist. Zwischen dem Schwenkschiebestück 63 und der Bodenschale 12 ist eine Druckfeder 64 eingespannt, die das Schwenkschiebestück 63 entgegen der Schieberichtung bei einer Umschaltung belastet und an den Schieber 44 drückt. Das Schwenkschiebestück 63 besitzt außerdem eine innere V-förmige Rückstellkurve 65, an der ein Rückstellzapfen 66 des Schaltstücks 48 anliegt.

Wird der Schalthebel 26, nach Fig. 1 betrachtet, im Uhrzeigersinn verschwenkt, so werden die Schieber 44 und das Schwenkschiebestück 63 entgegen der Kraft der Druckfeder 64 verschoben. Der Umschaltnocken 62 gleitet je nach Lage des Schaltstücks 48 in einer der Mulden 67 bzw. 68 der Steuerkurve 61 hinein, wobei sich der Schiebebewegung des Schwenkschiebestücks 63 eine Verschwenkung überlagert. Sobald der Umschaltnocken 62 den tiefsten Punkt einer Mulde erreicht hat, führt eine weitere Verschiebung des Schiebers 44 zu einem Verschwenken des Schaltstücks 48 und damit zu einem Umschalten des Kontaktbalkens 56. Nach dem Loslassen des Schalthebels 26 werden das Schwenkschiebestück 63 und der Schieber 44 von der Druckfeder 64 wieder zurückgestellt, wobei das Schwenkschiebestück aufgrund des Rückstellzapfens 66 und der Rückstellkurve 65 auch wieder in eine unverschwenkte Position gelangt.

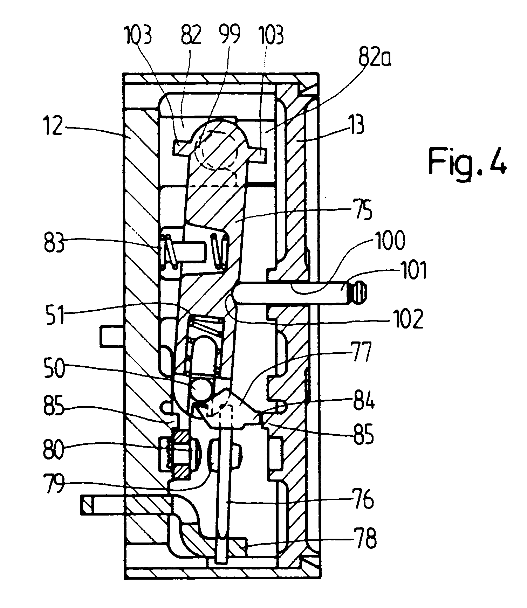

Nahe der Wand des Schaltergehäuses 10, durch die der Schalthebel 26 in das Schaltergehäuse 10 hineinragt, und im wesentlichen quer zum Schalthebel 26 und damit parallel zum Schaltstück 48 und zum Kontaktbalken 56 ausgerichtet, sind in der Bodenschale 12 ein zweites Schaltstück 75 und ein zweiter beweglicher Kontaktbalken 76 untergebracht (Fig. 4). Auch dieses zweite Schaltstück 75 enthält eine Schaltwalze 50 und eine Druckfeder 51, die die Schaltwalze 50 gegen einen an den Kontaktbalken 76 angespritzten wiederum dachförmigen Rastkörper 77 drückt. Der Kontaktbalken 76 ist an einem Festkontakt 78 schwenkbar gelagert und trägt zwischen seiner Lagerstelle und dem Rastkörper 77 einen Kontaktniet 79, mit dem er einen Festkontakt 80 beaufschlagen kann, der unterhalb des Kontaktbalkens 76 angeordnet ist. Das Schaltstück 75 ist an seinem dem Kontaktbalken 76 entfernten Ende mit zwei Lagerzapfen 81 (Fig. 3) in zwei Lageraufnahmen 82 der Bodenplatte 12, die von zwei zugehörigen Niederhaltern 82a des Zwischenbodens 13 abgeschlossen sind, schwenkbar gelagert. Die Lageraufnahmen 82 beinhalten jeweils das sich im wesentlichen in Längsrichtung des Stößels 101 erstreckende Langloch 99 für die Lagerzapfen 81. Zwischen der Lagerstelle und seinem dem Kontaktbalken 76 zugewandten Ende ist das Schaltstück 75 über eine Druckfeder 83 an der Bodenplatte 12 abgestützt. Die Druckfeder 83 versucht das Schaltstück 75 also, in dem Schnitt nach Fig. 4 betrachtet, entgegen dem Uhrzeigersinn zu verschwenken.

Der Rastkörper 77 ist anders als der Rastkörper 55 des Kontaktbalkens 56 mit einem Vorsprung 84 versehen, mit dem er in der in Fig. 4 gezeigten Stellung des Kontaktbalkens 76 an einem Anschlag 85 des Zwischenbodens 13 anliegt.

Wird der Schalthebel aus seiner Ruhestellung, in der der Bolzen 27 am oberen Ende des Langlochs 41 anliegt um die Führung 90 herum verschwenkt, dann wird ein Stößel 101, der in einer Bohrung 100 im Zwischenboden 13 angeordnet ist und sich zwischen dem Schalthebel 26 und einem zweiten Schaltstück 75 erstreckt, entlastet. Das obere Ende des Stößels 101 greift zwischen dem freien Ende des Schalthebels 26 und der Bolzenführung 40 in der Nähe des Bolzens 27 am Schalthebel 26 an. Bei einer Verschwenkung des Schalthebels 26a, bei der sich der Bolzen 27 innerhalb des Langlochs 41 bewegt, wird das zweite Schaltstück 75, in dem Schnitt nach Fig. 4 betrachtet, entgegen dem Uhrzeigersinn verschwenkt. Dadurch wird der Kontaktbalken 76 in der schon bezüglich des Kontaktbalkens 56 und des Schaltstücks 48 beschriebenen Weise unter der Kraft der Feder 83 in eine Position umgeschaltet, in der der Kontaktbalken 76 mit dem Kontaktniet 79 am Festkontakt 80 anliegt. Ist der Lenkstockschalter in ein Kraftfahrzeug eingebaut und das Bordnetz angeschlossen, so ist dann die Lichthupe eingeschaltet. Die Betätigung des Schalthebels 26 ermöglicht eine Betätigung der Lichthupe bereits nach einem kleinen Verschwenkweg des Schalthebels 26, wobei der Schieber 44 nicht betätigt wird.

Wird nach dem Einschalten der Lichthupe, wobei der Schalthebel 26 seine erste Schaltposition verläßt und in die zweite Schaltposition überwechselt, in der der Bolzen 27 gerade am unteren Ende des Langlochs 41 zu liegen kommt, so behält das Schaltstück 75, das an dem Zwischenboden 13 anliegt, seine aktivierte Lage bei. Nun wird über den Schieber 44 das erste Schaltstück betätigt. In dieser zweiten Schaltposition wird zwischen dem Fern- und dem Abblendlicht des Kraftfahrzeugs umgewechselt.

Wird nun der Schalthebel 26 losgelassen, so bleiben das Schaltstück 48 und der Kontaktbalken 56 in der gerade erreichten Position, während die anderen bewegten Schalterteile einschließlich des Schaltstücks 75 und des Kontaktbalkens 75 wieder zurückgestellt werden.

Es kann festgestellt werden, daß der erfindungsgemäße Lenkstockschalter zwei voneinander getrennte Dreh- bzw. Schwenkpunkte für die Lichtumschaltung sowie für die Funktion der Lichthupe aufweist. Der eine Drehpunkt wird für die erste Schaltposition von der Führung 90 gebildet, wobei der zweite Drehpunkt bzw. die zweite Schwenkachse vom Bolzen gebildet wird. Aufgrund der geringen Platzverhältnisse sowie der geringen Schaltwege wurde der Drehpunkt für die Lichthupe weit vom Drehpunkt der Lichtumschaltung entfernt, um eine sichere Umschaltung der Lichthupenfunktion ohne zusätzlichen Übersetzungshebel zu erreichen. Die Lage des Langlochs 41 ist dabei so gewählt, daß es einerseits in Richtung auf das zweite Schaltstück 75 zeigt, andererseits im wesentlichen in Richtung der Schraubenfeder 30 bzw. der Rastrolle 31 sich erstreckt. Hierdurch wird der Vorteil erzielt, daß in der Ruhelage des Schalthebels 26 der Bolzen 27 selbsttätig eine Ruhelage im Langloch 41 einnimmt, in dem dieses über die Schraubenfeder 30 derart verschoben wird, daß der Bolzen 27 am oberen Ende des Langlochs 41 zu liegen kommt. Beim Betätigen des Schalthebels 26 wird also der Schalthebel 26 zuerst eine Verschwenkbewegung mit einem Weg in Länge des Langlochs 41 nach oben durchführen, wobei über den Stößel 101 die Lichthupenfunktion freigegeben wird. Der Drehpunkt ist für diese Funktion die obere Anlagefläche der Führung 90 am Mitnehmer 14. Wenn das untere Ende des Langlochs 41 am Bolzen 27 anschlägt, dient dieser beim Weiterverschwenken des Schalthebels 26 als Drehpunkt für die Fahrlichtumschaltung, wobei das im Mitnehmer 14 sich befindende Ende des Schalthebels 26 nach unten geschwenkt wird. Es wird dann die Lichtumschaltfunktion über den Schieber 44 und das Schaltherz bewirkt. Nach dem Loslassen des Schalthebels 26 geht dieser wieder über die Kraft der Schraubenfeder 30 in die Ausgangsstellung zurück und die Lichthupe wird dann durch Beaufschlagung des Stößels 101 wieder ausgeschaltet. Die Lichthupe wird über die Druckfeder 83 eingeschaltet und über den Stößel 101 zwangsausgeschaltet, d.h. sie kann nicht durch Hängenbleiben o.dgl. eingeschaltet bleiben. Durch eine kugelsegmentförmige Vertiefung 102, die in Verlängerung des Stößels 101 in die Oberseite des Schaltstücks 75 eingebracht ist und in die der Stößel 101 mit einem abgerundeten Ende eingreift, wird die Führung des Stößels 101 weiter verbessert.

Durch die unterschiedlichen Toleranzabweichungen der einzelnen Bauteile der Vorrichtung muß, um ein sicheres Umschalten der Lichthupenfunktion zu gewährleisten, im Lagerbereich des Stößels 101 ein Überhub gewährleistet sein. Wie bereits erwähnt, wird die Lichthupe über den Stößel 101 ausgeschaltet. Dieser ist so angeordnet, daß bei der Ausschaltbewegung zuerst das Schaltstück 75 auf der Kontaktbrückenseite bis zum Anschlag auf der Kontaktplatte über den Stößel 101 geschaltet wird. Nach Erreichen des Anschlags auf der Kontaktplatte wird das Schaltstück 75 auf der Lagerseite in einem Langloch 99 um den Überhub nach unten gedrückt. Durch diesen Überhub, welcher durch die Länge des Stößels 101 bestimmt wird, können sämtliche Toleranzabweichungen der Einzelteile aus verschiedenen Formnestern aufgefangen werden und dadurch immer eine sichere Kontaktumschaltung gewährleistet werden. Dieser Bewegungsablauf wird durch die Anordnung zwischen Stößel 101 und Druckfeder 83 beaufschlagt.

Um ein Verkanten des Schaltstücks 75 zu vermeiden, welches eventuell durch nicht ganz exakt zentrische Beaufschlagung des Schaltstücks 74 durch den Stößel 101 verursacht werden könnte, besitzt das Schaltstück 75 zwei Führungsstege 103. Diese Führungsstege 103 befinden sich im Bereich der Lagerung des Schaltstücks 75 an dessen Ober- und Unterseite und erstrecken sich in Querrichtung des Schaltstücks 75 und im wesentlichen senkrecht zur Ober- bzw. Unterseite des Schaltstücks 75. Die Führungsstege 103 liegen mit ihren Seitenflächen an den Innenseiten der Lageraufnahmen 82 bzw. der Niederhalter 82a an und verhindern somit ein Verkanten des Schaltstücks 75 um dessen Längsachse.

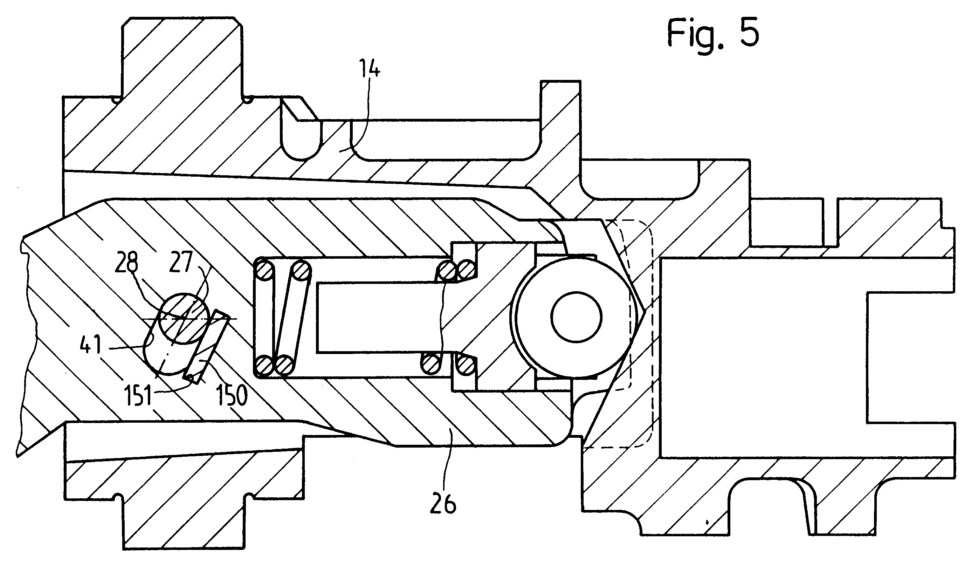

Fig. 5 zeigt einen Ausschnitt aus Fig. 1 mit einer gegenüber Fig. 1 abgewandelten Ausführungsform des Langlochs. Dabei ist das Langloch 41 durch ein Begrenzungselement 150 an seiner Führungskante verstärkt, um den Abrieb des als Zylinderstift ausgestalteten Bolzens 27 an dem Langloch 41 herabzusetzen. Das Begrenzungselement 150 ist ein Stahlblech, welches in eine entsprechende Ausnehmung 151 in dem Schalthebel 26 eingefügt ist. Das Stahlblech selber hat eine sehr viel größere Festigkeit als das Material des Schalthebels 26, welcher beispielsweise aus einem Zinkguß bestehen kann. Das Langloch sollte vorzugsweise in das Material des Schalthebels 26 direkt eingeformt sein. Es kann aber auch, wie aus Fig. 1 ersichtlich, in eine auswechselbare Bolzenführung 40 eingefügt sein, die vorzugsweise aus Kunststoff besteht. Eine derartige Bolzenführung gibt die Möglichkeit bei sonst unverändertem mechanischem Aufbau des Lenkstockschalters Lage und Art der Führung des Bolzens 27 den jeweiligen Bedürfnissen in einfacher Weise anzupassen. Ansonsten kann der Lenkstockschalter nach Fig. 5 die gleiche Arbeitsweise wie der Lenkstockschalter nach Fig. 1 besitzen.

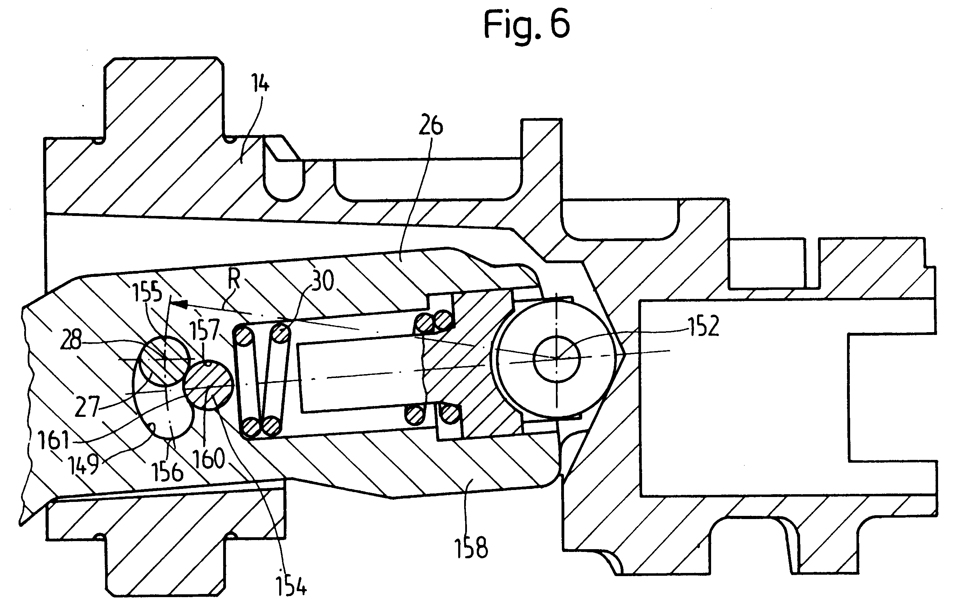

Fig. 6 zeigt eine weitere geänderte Ausführungsform des Lenkstockschalters nach Fig. 1. Dabei ist hier ein gekrümmtes Langloch 149 vorgesehen, welches auf einem Kreis um die zweite Achse 152 mit dem Radius R liegt. Vorzugsweise wird die Krümmung durch um die Längsachse 160 des zweiten Zylinders 154 geschlagene Kreise festgelegt. Die Breite des Langloches ist nur geringfügig größer als der Durchmesser des Bolzens 27.

Das Langloch 149 ist etwa symmetrisch zur Längsachse des Schalthebels 26 angeordnet, wobei die Krümmung des Langlochs größer ist als die Krümmung des Radius R. Für die Erfindung wesentlich ist nun ein zylinderförmiges Begrenzungselement 154, welches in seinem Durchmesser etwa dem des Bolzens 27 entspricht. Dabei ist die Krümmung des Zylinders 154 der Krümmung des Langlochs 152 etwa angepaßt. Die Krümmung des Zylinders 154 kann aber auch stärker als die des Langlochs längs der Führungslinie sein, so daß ein Ausschnitt des Zylinders 154 in das Langloch hineinragt. Hierdurch wird ein Rasteffekt erhalten, da unter der Kraft der Feder 30 der Zylinder 154 gegen den Bolzen 27 gepreßt wird, so daß er mit einer Mantellinie an einer entsprechenden Mantellinie des Bolzens 27 solange entlanggleitet, bis eine der beiden Endstellungen 155, 156 erreicht sind, die als Anschlag für den Bolzen 27 wirken. Auf diese Weise ist ausgeschlossen, daß der Schalthebel 26 von sich aus dauerhaft eine Zwischenstellung einnehmen kann.

Die zylinderförmige Begrenzungselement 154 ist wiederum aus einem festen Stahl und eine entsprechende Ausnehmung 157 im Steuerhebel 26 eingefügt, der die Mantelfläche des Zylinders 154 weitgehend umschließt und diesen so festhält. Andererseits ist der nichtumschlossene Abschnitt 158 des Zylinders 154 so groß gewählt, daß sichergestellt ist, daß die beiden Zylinder 155, 154 stets mit einander in Berührung stehen.

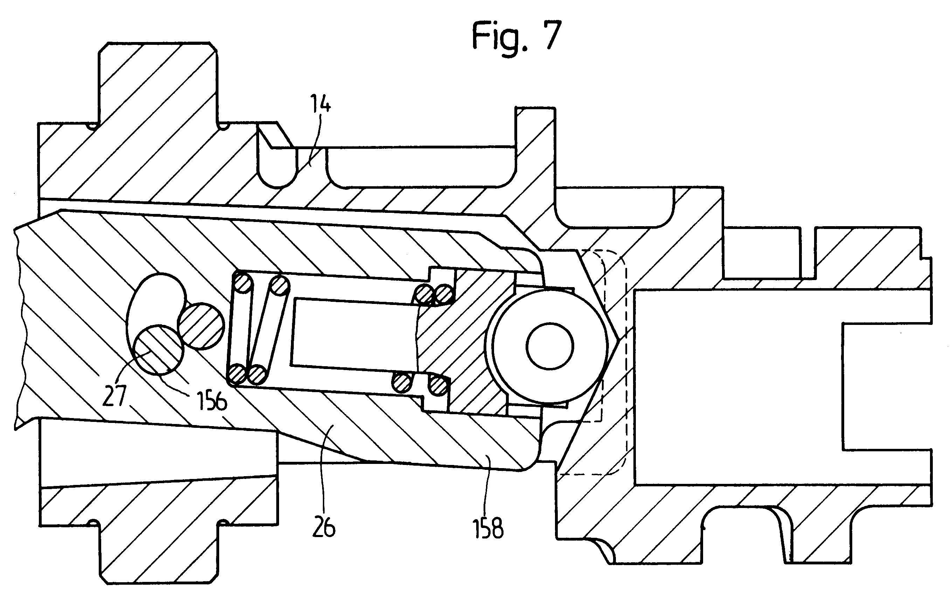

Die Anordnung nach Fig. 6 erzwingt, daß der Schalthebel 26 eine von zwei stabilen Endlagen einnimmt, in denen der Bolzen 27 entweder am Anschlag 155 oder an den Anschlag 156 (siehe Fig. 7) anliegt. In jeder der genannten beiden Endlagen kann dann beim Weiterschwenken des Steuerhebels über die genannte Endlage hinaus der Steuerhebel mit dem betreffenden Anschlag 156 bzw. 157 um den Bolzen 27 um gedreht werden, wobei dann der Steuerhebel 26 um die erste Achse 28 schwenkt. Dabei wird das vordere Ende 158 des Steuerhebels 26 herausgeschwenkt, wodurch ein erster Schalter betätigt werden kann. Mit Hilfe des ersten Schalters kann beispielsweise die Lichthupe oder eine andere geeignete Einrichtung bedient werden, die insbesondere zu Signalzwecken dienen kann.

Im Zusammenhang mit Fig. 6 sei angenommen, daß sich der Steuerhebel 26 in einer Stellung befindet, in der ein den Elementen 75, 100 in Fig. 1 entsprechender Schalter derart betätigt ist, daß das Fernlicht eingeschaltet ist. Dies ist dadurch möglich, daß der Steuerhebel 26 um die zweite Achse 152 mit seinem in Fig. 6 linken Ende nach unten geschwenkt wird, bis der Bolzen 27 an dem Anschlag 155 anliegt. Aus dieser Stellung ist es ggf. möglich, durch eine weitere Schwenkbewegung den Steuerhebel 26 um den Bolzen 27 zu drehen, so daß das vordere Ende 158 des Steuerhebels 26 nach oben wandert und einen anderen geeigneten Schalter auslöst. Im vorliegenden Ausführungsbeispiel gemäß Fig. 6 ist dies nicht möglich, da eine Abstützung 159 eine weitere Schwenkbewegung des Hebels 26 nach unten begrenzt.

In Fig. 7 ist der Steuerhebel 26 nach Fig. 6 in seiner zweiten Endlage gezeigt, bei dem der Anschlag 156 an dem Bolzen 27 anliegt. Diese durch Schwenken des in Fig. 7 linken Endes des Hebels 26 nach oben erreichte Endstellung erlaubt es, den Hebel 26 nunmehr mit dem Anschlag 156 um den Bolzen 27 zu schwenken, so daß nach Fig. 7 das vordere Ende 158 nach unten geschwenkt wird und dabei, wie weiter oben schon erläutert, einen geeigneten Schalter, wie beispielsweise die Lichthupe auslöst. Auf diese Weise ist es möglich, ausgehend von der in Fig. 7 gezeigten Stellung für Abblendlicht, jederzeit durch eine Weiterbewegung des Hebels 26 über die Lage des Abblendlichts hinaus die Lichthupe zu betätigen.

## Patentansprüche

1. Lenkstockschalter für Kraftfahrzeuge, insbesondere Fahrlichtum- und Lichthupenschalter, mit einem Schaltergehäuse (10), mit einem manuell verschwenkbaren Schalthebel (26) zur Betätigung eines Schaltwerkes, über das ein erster beweglicher elektrischer Kontakt (56) steuerbar ist und zur Betätigung eines zweiten Schaltstücks (75), über das ein zweiter beweglicher elektrischer Kontakt (76) ansteuerbar ist, wobei der Schalthebel in einen um eine dritte Achse (16) drehbaren Mitnehmer (14) gelagert ist und wobei der Schalthebel in einem Langloch (41) geführt um eine im wesentlichen senkrecht zur dritten Achse stehende zweite Achse (31) schwenkbar ist und dabei den zweiten Kontakt (76) betätigt und bei Anlage an einem Anschlag an der Langlochführung um eine in Höhe des Anschlags liegende, im wesentlichen parallel zur zweiten Achse stehende erste Achse schwenkbar ist und dabei den ersten elektrischen Kontakt (56) betätigt, dadurch **gekennzeichnet,** daß ein Abschnitt der umlaufenden Führungsfläche des im Schalthebel (26) befindlichen Langlochs (41) durch ein in den Schalthebel (26) eingefügtes Begrenzungselement (150,154) im Auflagebereich am Sangloch (A1,152) begrenzt ist, daß an dem Begrenzungselement ein im Mitnehmer (14) verankerter erster Zylinderstift (27) entlanggleitet, während der Schalthebel (26) um die zweite Achse (152) schwenkt.

2. Lenkstockschalter nach Anspruch 1, dadurch **gekennzeichnet,** daß das Begrenzungselement (150,154) aus einem Material höherer Festigkeit als das Material des Schalthebels (26) gebildet ist und vorzugsweise eine bearbeitete Oberfläche besitzt.

3. Lenkstockschalter nach Anspruch 2, dadurch **gekennzeichnet,** daß das Begrenzungselement (150) ein im wesentlichen quaderförmiges Begrenzungsblech ist, welches in den Schalthebel vorzugsweise unlösbar eingefügt ist.

4. Lenkstockschalter nach einem der vorangegangenen Ansprüche, dadurch **gekennzeichnet,** daß das Begrenzungselement (154) ein zweiter Zylinderstift ist, der sich parallel zur Achse des ersten Zylinderstiftes (27) erstreckend am Schalthebel (26) befestigt ist.

5. Lenkstockschalter nach einem der Ansprüche 1 bis 4, dadurch **gekennzeichnet,** daß der Schalthebel (26) in an sich bekannter Weise in Richtung der Verbindungslinie zwischen zweiter Achse (152) und Langloch (41) federnd vorgespannt ist und daß das Begrenzungselement (150,154) während der Führung des Schalthebels (26) im Langloch (41) unter der Federvorspannung an dem ersten Zylinderstift (27) entlanggleitet.

6. Lenkstockschalter nach Anspruch 4 oder 5, dadurch **gekennzeichnet,** daß der erste Zylinderstift (27) und der zweite Zylinderstift (154) aus Kreiszylindern gebildet sind, die etwa den gleichen Druchmesser besitzen.

7. Lenkstockschalter nach Anspruch 6, dadurch **gekennzeichnet,** daß die Krümmung der Führungsfläche des Begrenzungselements (154) größer als die Krümmung der sich anschließenden Führungsabschnitte des Langlochs (41) ist.

8. Lenkstockschalter nach einem der vorangegangenen Ansprüche, dadurch **gekennzeichnet,**, daß das Begrenzungselement (150,154) gegenüber dem Langloch symmetrisch angeordnet ist.

9. Lenkstockschalter nach einem der vorangegangenen Ansprüche, dadurch **gekennzeichnet,** daß das Langloch (41) gegenüber der Verbindungslinie zwischen zweiter Achse (152) und Langloch (41) vorzugsweise zum ersten Schaltkontakt (75) weisend geneigt ist.

10. Lenkstockschalter nach einem der vorangegangenen Ansprüche, dadurch **gekennzeichnet,** daß das Langloch sich längs eines Kreises um die zweite Achse (152) erstreckt und Teile der Kontur einem um die Achse (160) des zweiten Zylinders (154) geschlagenen Kreises folgen.

11. Lenkstockschalter nach einem der vorangegangenen Ansprüche, dadurch **gekennzeichnet,** daß der Schalthebel unter federnder Vorspannung jeweils eine von zwei stabilen Endstellungen einnimmt, wobei die erste Endstellung einem eingeschalteten Abblendlicht und die zweite Endstellung einem eingeschalteten Fernlicht entspricht.

12. Lenkstockschalter nach Anspruch 11, dadurch **gekennzeichnet,** daß daß bei einer Bewegung des Schalthebels über die das Abblendlicht definierende Endstellung hinaus der Schalthebel um den zugehörigen Anschlag schwenkt und dabei die Lichthupe betätigt.

13. Lenkstockschalter nach Anspruch 1, dadurch **gekennzeichnet,** daß das Langloch (41) sich von der Lagerstelle der Achse im wesentlichen in Richtung auf das zweite Schaltstück (75) erstreckt.

14. Lenkstockschalter nach Anspruch 13, dadurch **gekennzeichnet,** daß die Schwenkachse (28) von einem Bolzen (27) gebildet wird, der sich in der Ruhelage des Schalthebels (26) an dem vom zweiten Schaltstück (75) entfernt liegenden Ende des Langlochs (41) befindet.

15. Lenkstockschalter nach Anspruch 13 oder 14, dadurch **gekennzeichnet,** daß der Schalthebel (26) wenigstens zwei Schaltstufen aufweist, wobei in der ersten Schaltstufe das zweite Schaltstück (75) und in der zweiten Schaltstufe das erste Schaltstück (48) betätigt werden.

16. Lenkstockschalter nach einem der vorhergehenden Ansprüche, dadurch **gekennzeichnet,** daß der Schalthebel (26) durch eine Wand des Schaltergehäuses (10) in dieses hineinragt, daß das erste Schaltstück (48) und das zweite Schaltstück (75) und/oder der zweite bewegliche Kontakt (76) im wesentlichen quer zum Schalthebel (26) ausgerichtet sind und daß sich das zweite Schaltstück (75) und/oder der zweite bewegliche Kontakt (75) nahe an der Wand des Schaltergehäuses (10) befinden, durch die der Schalthebel (26) hindurchtritt und daß das erste Schaltstück (48) und das Umschaltwerk im Abstand davon angeordnet sind.

17. Lenkstockschalter nach Anspruch 16, dadurch **gekennzeichnet,** daß der Schieber (44) des Umschaltwerks durch einen Durchbruch (42) im Mitnehmer (14) hindurch mit einem Schalthebel (26) gekoppelt ist und daß sich der zweite bewegliche Kontakt (76) und/oder das zweite Schaltstück (75) zwischen einer Lagerbrücke (13) für den Mitnehmer (14) und einer feste elektrische Kontakte (57,59,60,78,80) tragenden Grundplatte (12) befindet.

18. Lenkstockschalter nach einem der vorhergehenden Ansprüche, dadurch **gekennzeichnet,** daß der Mitnehmer (14) einen im wesentlichen konisch nach außen aufweitenden, den Schalthebel (20) aufnehmenden Hohlraum (25) aufweist.

19. Lenkstockschalter nach einem der vorhergehenden Ansprüche, dadurch **gekennzeichnet,** daß zwischen der Verschwenkbewegung des Schalthebels (26) für die Ansteuerung des einen Schaltstückes (48 bzw. 75) und der Verschwenkbewegung des Schalthebels (26) für die Ansteuerung des anderen Schaltstücks (75 bzw. 48) ein spürbarer Druckpunkt liegt.

20. Lenkstockschalter nach einem der vorhergehenden Ansprüche, dadurch **gekennzeichnet,** daß das zweite Schaltstück (75) in einem Langloch (99) gelagert ist.

21. Lenkstockschalter nach Anspruch 20, dadurch **gekennzeichnet,** daß sich das Langloch (99) im wesentlichen in Richtung der Längsachse eines vom Schalthebel (26) beaufschlagten Stößels (101) erstreckt.

22. Lenkstockschalter nach Anspruch 20 oder 21, dadurch **gekennzeichnet,** daß das Langloch (99) im Schaltstück (75) oder in einem die Lagerung des Schaltstücks (75) aufnehmenden Element, z.B. eine Bodenplatte (12) vorgesehen ist.

## Claims

1. A steering column switch for automotive vehicles, in particular a driving beam change-over and flashing switch, including a switch housing (10), a manually pivotable switch lever (26) for the actuation of a switching device by which a first movable electric contact (56) is controllable and for the actuation of a second contact piece (75) by which a second movable electric contact (76) is controllable, wherein the switch lever is supported in a carrier (14) rotatable around a third axis (16), and wherein the switch lever is guided in a longitudinal aperture (41) and is pivotable about a second axis (31) that is essentially perpendicular to the third axis, thereby actuating the second contact (76), and wherein the switch lever, when abutting on a stop on the longitudinal aperture guide, is pivotable about a first axis, which lies on the level of the stop and is essentially parallel to the second axis, thereby actuating the first electric contact (56),
**characterized** in that one portion of the circumferential guide surface of the longitudinal aperture (41) in the switch lever (26) is limited by a limiting component (150, 154) inserted into the lever (26) in the abutment area on the longitudinal aperture (A1, 152), and in that a first cylindrical pin (27) anchored in the carrier (14) slides along the limiting component, while the switch lever (26) pivots about the second axis (152).

2. A steering column switch as claimed in claim 1,
**characterized** in that the limiting component (150, 154) is formed of a material of higher strength than that of the material of the lever (26) and preferably has a processed surface.

3. A steering column switch as claimed in claim 2,
**characterized** in that the limiting component (150) is an essentially cuboid-shaped limiting plate inserted into the lever in a preferably undetachable manner.

4. A steering column switch as claimed in any one of the preceding claims,
**characterized** in that the limiting component (154) is a second cylindrical pin which, extending parallel to the axis of the first cylindrical pin (27), is fastened to the lever (26).

5. A steering column switch as claimed in any one of claims 1 through 4,
**characterized** in that, in a manner known per se, the lever (26) is resiliently prestressed along the direction of the connecting line between the second axis (152) and the longitudinal aperture (41), and in that, under the prestress of the spring, the limiting component (150, 154) slides along the first cylindrical pin (27) during the guidance of the lever (26) in the longitudinal aperture (41).

6. A steering column switch as claimed in claim 4 or in claim 5,
**characterized** in that the first cylindrical pin (27) and the second cylindrical pin (154) are formed by circular cylinders having approximately the same diameter.

7. A steering column switch as claimed in claim 6,
**characterized** in that the curvature of the guiding surface of the limiting component (154) is larger than the curvature of the following guiding sections of the longitudinal aperture (41).

8. A steering column switch as claimed in any one of the preceding claims,
**characterized** in that the limiting component (150, 154) is arranged symmetrically with respect to the longitudinal aperture.

9. A steering column switch as claimed in any one of the preceding claims,
**characterized** in that, with respect to the connecting line between the second axis (152) and the longitudinal aperture (41), the longitudinal aperture (41) is inclined so as to point preferably towards the first switch contact (75).

10. A steering column switch as claimed in any one of the preceding claims,
**characterized** in that the longitudinal aperture extends alongside a circle around the second axis (152), and parts of the contour follow a circle described around the axis (160) of the second cylinder (154).

11. A steering column switch as claimed in any one of the preceding claims,
**characterized** in that the lever, under resilient prestress, adopts one of two stable end positions at a time, with the first end position corresponding to a turned-on lower beam and with the second end position corresponding to a turned-on upper beam.

12. A steering column switch as claimed in claim 11,
**characterized** in that, upon a movement of the lever beyond the end position defining the lower beam, the lever pivots about the appertaining stop, thus operating the flashing function.

13. A steering column switch as claimed in claim 1,
**characterized** in that the longitudinal aperture (41) extends from the point of support of the axis generally in the direction of the second contact piece (75).

14. A steering column switch as claimed in claim 13,
**characterized** in that the pivot axis (28) is formed by a bolt (27) which, in the rest position of the lever (26), is situated at that end of the longitudinal aperture (41) which is remote from the second contact piece (75).

15. A steering column switch as claimed in claim 13 or in claim 14,
**characterized** in that the lever (26) at least has two switching steps, with the second contact piece (75) being operated in the first switching step and with the first contact piece (48) being operated in the second switching step.

16. A steering column switch as claimed in any one of the preceding claims,
**characterized** in that the lever (26) extends into the switch housing (10) through a wall of the same, in that the first contact piece (48) and the second contact piece (75) and/or the second movable contact (76) essentially are aligned transversely to the lever (26), and in that the second contact piece (75) and/or the second movable contact (75) are located near the wall of the switch housing (10) through which the lever (26) passes, and in that the first contact piece (48) and the change-over device are arranged at a distance with regard to the second contact piece.

17. A steering column switch as claimed in claim 16,
**characterized** in that the slide (44) of the change-over device is coupled with a lever (26) through a penetration (42) in the carrier (14), and in that the second movable contact (76) and/or the second contact piece (75) is located between a bearing bridge (13) of the carrier (14) and a base plate (12) carrying fixed electric contacts (57, 59, 60, 78, 80).

18. A steering column switch as claimed in any one of the preceding claims,
**characterized** in that the carrier (14) has a cavity (25) essentially flaring outwards and accommodating the lever (20).

19. A steering column switch as claimed in any one of the preceding claims,
**characterized** in that there is a pressure point, which can be felt, between the pivoting movement of the lever (26) for actuating one of the contact pieces (48 or 75, respectively) and the pivoting movement of the lever (26) for actuating the other contact piece (75 or 48, respectively).

20. A steering column switch as claimed in any one of the preceding claims,
**characterized** in that the second contact piece (75) is supported in a longitudinal aperture (99).

21. A steering column switch as claimed in claim 20,
**characterized** in that the longitudinal aperture (99) essentially extends along the direction of the longitudinal axis of a tappet (101) acted upon by the lever (26).

22. A steering column switch as claimed in claim 20 or in claim 21,
**characterized** in that the longitudinal aperture (99) is provided in contact piece (75) or in a component such as a bottom plate (12) accommodating the support of contact piece (75).

## Revendications

1. Commutateur de colonne de direction pour véhicule automobile, notamment commutateur de changement de feux de conduite et commutateur d'avertisseur lumineux, comprenant un boîtier de commutateur (10) et un levier de commutation (26) pouvant être basculé manuellement et servant à actionner un mécanisme de commutation, par l'intermédiaire duquel un premier contact électrique mobile (56) peut être commandé, et à actionner une seconde pièce de commutation (75) par l'intermédiaire de laquelle un second contact électrique mobile (76) peut être commandé, tandis que le levier de commutation est monté à palier dans un élément d'entraînement (14) pivotant autour d'un troisième axe (16) et le levier de commutation peut basculer, en étant guidé dans un trou allongé (41), autour d'un deuxième axe (31) pratiquement perpendiculaire au troisième axe et actionne alors le second contact (76) et, lorsqu'il vient en appui sur une butée située sur le guidage à trou allongé, il peut basculer autour d'un premier axe situé à hauteur de la butée et pratiquement parallèle au deuxième axe et actionne alors le premier contact électrique (56), caractérisé en ce qu'une section de la surface périphérique de guidage présentée par le trou allongé (41) situé dans le levier de commutation (26) est limitée, dans la zone (A1, 152) d'appui sur le trou allongé, par un élément de limitation (150, 154) inséré dans le levier de commutation (26) et en ce qu'une première broche cylindrique (27), ancrée dans l'élément d'entraînement (14), glisse sur l'élément de limitation pendant que le levier de commutation (26) bascule autour du deuxième axe (152).

2. Commutateur de colonne de direction selon la revendication 1, caractérisé en ce que l'élément de limitation (150, 154) est en une matière de résistance mécanique supérieure à celle de la matière du levier de commutation (26) et comporte de préférence une surface usinée.

3. Commutateur de colonne de direction selon la revendication 2, caractérisé en ce que l'élément de limitation (150) est une tôle de limitation pratiquement parallélépipédique qui est insérée, de préférence à demeure, dans le levier de commutation.

4. Commutateur de colonne de direction selon l'une des revendications précédentes, caractérisé en ce que l'élément de limitation (154) est une seconde broche cylindrique qui est fixée au levier de commutation (26) en étant orientée parallèlement à l'axe de la première broche cylindrique (27).

5. Commutateur de colonne de direction selon l'une des revendications 1 à 4, caractérisé en ce que, d'une manière connue, le levier de commutation (26) est soumis à une précontrainte élastique en direction de la ligne de jonction entre le deuxième axe (152) et le trou allongé (41) et en ce que, pendant le guidage du levier de commutation (26) dans le trou allongé (41), l'élément de limitation (150, 154) glisse sur la première broche cylindrique (27) sous l'effet de la précontrainte élastique.

6. Commutateur de colonne de direction selon la revendication 4 ou 5, caractérisé en ce que la première broche cylindrique (27) et la seconde broche cylindrique (154) sont formées de cylindres à section circulaire qui ont approximativement le même diamètre.

7. Commutateur de colonne de direction selon la revendication 6, caractérisé en ce que la courbure de la surface de guidage de l'élément de limitation (154) est supérieure à la courbure de la section adjacente de guidage du trou allongé (41).

8. Commutateur de colonne de direction selon l'une des revendications précédentes, caractérisé en ce que l'élément de limitation (150, 154) est disposé d'une manière symétrique vis-à-vis du trou allongé.

9. Commutateur de colonne de direction selon l'une des revendications précédentes, caractérisé en ce que le trou allongé (41) est incliné vis-à-vis de la ligne de jonction entre le deuxième axe (152) et le trou allongé (41), en étant de préférence dirigé vers le premier contact de commutation (75).

10. Commutateur de colonne de direction selon l'une des revendications précédentes, caractérisé en ce que le trou allongé s'étend le long d'un cercle centré sur le deuxième axe (152) et des parties du contour suivent un cercle tracé autour de l'axe (160) du second cylindre (154).

11. Commutateur de colonne de direction selon l'une des revendications précédentes, caractérisé en ce que le levier de commutation occupe l'une ou l'autre de deux positions d'extrémité stables chaque fois sous l'effet d'une précontrainte élastique, la première position d'extrémité correspondant à un feu de croisement allumé et la seconde position d'extrémité à un feu de route allumé.

12. Commutateur de colonne de direction selon la revendication 11, caractérisé en ce que, lorsque le levier de commutation est déplacé au-delà de la position d'extrémité établissant le feu de croisement, le levier de commutation bascule autour de la butée associée et actionne alors l'avertisseur lumineux.

13. Commutateur de colonne de direction selon la revendication 1, caractérisé en ce que le trou allongé (41) s'étend de l'emplacement de montage à palier de l'axe pratiquement en direction de la seconde pièce de commutation (75).

14. Commutateur de colonne de direction selon la revendication 13, caractérisé en ce que l'axe de basculement (28) est constitué d'une broche (27) qui, dans la position de repos du levier de commutation (26), est disposée à l'extrémité du trou allongé (41) qui est située à l'opposé de la seconde pièce de commutation (75).

15. Commutateur de colonne de direction selon la revendication 13 ou 14, caractérisé en ce que le levier de commutation (26) comporte au moins deux étages de commutation, la seconde pièce de commutation (75) étant actionnée dans le premier étage de commutation et la première pièce de commutation (48) actionnée dans le second étage de commutation.

16. Commutateur de colonne de direction selon l'une des revendications précédentes, caractérisé en ce que le levier de commutation (26) pénètre dans le boîtier de commutateur (10) en traversant une paroi de ce dernier, en ce que la première pièce de commutation (48) et la seconde pièce de commutation (75) et/ou le deuxième contact mobile (76) sont orientés d'une manière pratiquement transversale vis-à-vis du levier de commutation (26), en ce que la seconde pièce de commutation (75) et/ou le second contact mobile (76) sont disposés au voisinage de la paroi du boîtier de commutateur (10) que traverse le levier de commutation (26) et en ce que la première pièce de commutation (48) et le mécanisme de commutation sont disposés à distance de cette paroi.

17. Commutateur de colonne de direction selon la revendication 16, caractérisé en ce que le poussoir (44) du mécanisme de commutation est accouplé à un levier de commutation (26) en traversant une ouverture (42) de l'élément d'entraînement (14) et en ce que le second contact mobile (76) et/ou la seconde pièce de commutation (75) sont disposés entre un pont (13) de montage à palier de l'élément d'entraînement (14) et une plaque de base (12) portant des contacts électriques fixes (57, 59, 60, 78, 80).

18. Commutateur de colonne de direction selon l'une des revendications précédentes, caractérisé en ce que l'élément d'entraînement (14) comporte une cavité (25) s'évasant d'une manière pratiquement conique vers l'extérieur et recevant le levier de commutation (26).

19. Commutateur de colonne de direction selon l'une des revendications précédentes, caractérisé en ce qu'un point de poussée qui est sensible est situé entre le déplacement basculant du levier de commutation (26) servant à commander une première pièce de commutation (48 ou 75) et le déplacement basculant du levier de commutation (26) servant à commander l'autre pièce de commutation (75 ou 48).

20. Commutateur de colonne de direction selon l'une des revendications précédentes, caractérisé en ce que la seconde pièce de commutation (75) est montée à palier dans un trou allongé (99).

21. Commutateur de colonne de direction selon la revendication 20, caractérisé en ce que le trou allongé (99) est dirigé pratiquement en direction de l'axe longitudinal d'un poussoir (101) soumis à l'action du levier de commutation (26).

22. Commutateur de colonne de direction selon la revendication 20 ou 21, caractérisé en ce que le trou allongé (99) est prévu dans la pièce de commutation (75) ou dans un élément, par exemple une plaque de fond (12), recevant le montage à palier de la pièce de commutation (75).
